# FASCICULE DE BREVET EUROPEEN

(11) **EP 1 464 212 B1**
(45) Date de publication et mention de la délivrance du brevet: **30.05.2007**
(21) Numéro de dépôt: 04290884.8
(22) Date de dépôt: 02.04.2004
(51) Int. Cl.: A01B 59/04, A01B 61/02, A01B 59/043

(54) **Dispositif de fixation d'un appareil agricole du type porté sur un engin tracteur**
VORRICHTUNG ZUR VERBINDUNG EINES GETRAGENEN LANDWIRTSCHAFTLICHEN GERÄTS MIT EINEM TRAKTOR
DEVICE FOR CONNECTION OF AN AGRICULTURAL IMPLEMENT OF THE MOUNTED TYPE WITH A TRACTOR

(30) Priorité: 04.04.2003 FR 0304212
(43) Date de publication de la demande: 06.10.2004
(73) Titulaire: EXEL INDUSTRIES, 51200 Epernay (FR)
(72) Inventeur: Ballu, Patrick Jean-Marie, 51100 Reims (FR)
(74) Mandataire: Myon, Gérard Jean-Pierre

(56) Documents cités:
- DE-B- 1 208 108
- DE-B- 1 215 419
- DE-B- 3 010 885
- FR-A- 2 765 772
- FR-A- 2 829 353
- US-A- 3 716 253
- US-A- 4 147 376

## Description

La présente invention se rapporte à un dispositif de fixation d'un appareil agricole du type porté sur un engin tracteur.

Certains appareils agricoles sont destinés à être portés derrière un engin tracteur, c'est-à-dire à être maintenus en porte-à-faux au-dessus du sol par le système d'attelage de l'engin tracteur.

C'est le cas notamment de certains appareils de pulvérisation de liquide phytosanitaire.

Classiquement, la liaison entre un appareil agricole du type porté et un engin tracteur est une liaison rigide obtenue en enclenchant l'appareil agricole sur le système d'attelage de l'engin tracteur, deux des points de liaison étant situés sur les bras d'attelage inférieurs et le troisième point de liaison étant situé sur le bras d'attelage supérieur de l'engin tracteur.

Du fait de sa rigidité, une telle liaison a pour effet d'entraîner la transmission de l'intégralité des secousses entre l'engin tracteur et l'appareil agricole, ce qui provoque à la longue l'usure de certaines pièces tant de l'engin tracteur que de l'appareil agricole.

Ceci vaut en particulier dans le cas où l'appareil agricole est un pulvérisateur de liquide phytosanitaire.

Dans ce cas en effet, il est d'usage de gonfler à bloc les pneumatiques de l'engin tracteur lorsque la cuve du pulvérisateur est pleine de liquide phytosanitaire, de manière à diminuer l'amplitude des oscillations de l'ensemble formé par l'engin tracteur et le pulvérisateur.

En fin de pulvérisation, lorsque la cuve est pratiquement vide, les pneumatiques de l'engin tracteur forment une suspension très raide, du fait de leur fort gonflement et du poids relativement faible du pulvérisateur.

Les secousses transmises entre l'engin tracteur et le pulvérisateur deviennent alors particulièrement violentes, ce qui peut conduire à un endommagement prématuré du matériel, et notamment des rampes de pulvérisation lorsqu'elles sont en position repliée semi-rigide le long ou derrière la cuve.

On connaît de FR 2 829 353 un dispositif de fixation d'un châssis d'appareil agricole du type porté sur un engin tracteur, ce dispositif comprenant :
- un système d'attelage destiné à être monté sur ledit engin tracteur,
- des moyens pour relier ledit châssis audit système d'attelage, aptes à maintenir cette liaison sous le seul effet du poids dudit appareil agricole, et
- des moyens élastiques aptes à amortir les secousses verticales transmises entre ledit engin tracteur et ledit châssis.

Grâce aux moyens élastiques de ce dispositif de la technique antérieure, on peut écrêter et dissiper une partie de l'énergie transmise entre l'engin tracteur et l'appareil agricole lors des secousses, et prolonger ainsi la durée de vie de l'ensemble du matériel, et notamment des rampes de pulvérisation.

Dans ce dispositif de la technique antérieure, les moyens de liaison sont formés par des crochets montés articulés sur le châssis du pulvérisateur.

Il en résulte que lorsque que l'engin tracteur circule sur un terrain irrégulier, le pulvérisateur peut osciller autour d'un axe sensiblement transversal à la direction d'avancement de l'engin tracteur.

Ceci est particulièrement gênant lorsque les rampes de pulvérisation sont repliées latéralement sur le pulvérisateur, c'est-à-dire lorsqu'elles se trouvent en configuration de transport.

Dans cette configuration en effet, les oscillations du pulvérisateur ont pour effet d'imprimer un mouvement de balancement aux rampes, entraînant une fatigue prématurée de l'ensemble du matériel.

La présente invention a notamment pour but de supprimer cet inconvénient.

On atteint ce but de l'invention avec un dispositif de fixation d'un châssis d'appareil agricole du type porté sur un engin tracteur, ce dispositif comprenant :
- un système d'attelage destiné à être monté sur ledit engin tracteur,
- des moyens pour relier ledit châssis audit système d'attelage, aptes à maintenir cette liaison sous le seul effet du poids dudit appareil agricole, et
- des moyens élastiques aptes à amortir les secousses verticales transmises entre ledit engin tracteur et ledit châssis,
remarquable en ce que lesdits moyens de liaison sont adaptés pour permettre uniquement un mouvement de translation dudit châssis par rapport audit système d'attelage.

Dans le contexte du présent document, le terme « translation » couvre tout mouvement dans lequel le châssis se déplace en restant sensiblement parallèle à lui-même.

Un tel mouvement peut donc être notamment un simple mouvement de coulissement, ou bien encore un mouvement du type « parallélogramme articulé », comme cela sera décrit dans ce qui suit.

Grâce à un tel mouvement de translation, on peut supprimer les inconvénients liés aux oscillations du dispositif de la technique antérieure, et notamment éviter les mouvements de balancement des rampes de pulvérisation en configuration de transport.

Suivant d'autres caractéristiques optionnelles du dispositif selon l'invention :
- ledit système d'attelage comprend au moins une barre d'attelage, et lesdits moyens de liaison sont conformés de manière à pouvoir être crochetés sur ladite barre d'attelage,
- ledit système d'attelage comprend un triangle d'attelage, et lesdits moyens de liaison comprennent trois organes formant crochets disposés en triangle,
- ledit système d'attelage définit sensiblement un profil mâle, et lesdits moyens de liaison définissent sensiblement un profil femelle apte à s'encastrer sur ledit système d'attelage,
- ledit système d'attelage définit sensiblement un profil femelle, et lesdits moyens de liaison définissent sensiblement un profil mâle apte à s'encastrer dans ledit système d'attelage,
- ledit système d'attelage comprend une partie supérieure de guidage et au moins une bielle inférieure de retenue, et lesdits moyens de liaison comprennent une partie supérieure montée coulissante sur ladite partie de guidage et une partie inférieure montée pivotante sur ladite bielle de retenue,
- lesdits moyens élastiques sont disposés dans des logements formés dans ledit châssis,
- lesdits moyens élastiques sont placés sur les barres formant ledit triangle d'attelage,
- ledit dispositif comprend un faux châssis interposé entre lesdits profils mâle et femelle, et lesdits moyens élastiques sont interposés entre ledit faux châssis et ledit profil mâle,
- ledit dispositif comprend un parallélogramme articulé interposé entre ledit châssis et ledit système d'attelage, et lesdits moyens élastiques sont disposés de manière à rappeler ce parallélogramme vers une position d'équilibre,
- ledit dispositif comprend des moyens pour verrouiller lesdits moyens de liaison sur ledit système d'attelage,
- lesdits moyens élastiques comprennent un organe choisi dans le groupe comprenant un plot en matériau élastomère, un ressort hélicoïdal, un ressort à air et un ressort hydraulique avec accumulateur.

D'autres caractéristiques et avantages de la présente invention apparaîtront à la lecture de la description qui va suivre et à l'examen du dessin annexé, dans lequel :
- la figure 1 est une vue en perspective d'un châssis d'appareil agricole relié à un engin tracteur par l'intermédiaire d'un système d'attelage, ce châssis et ce système d'attelage définissant un dispositif conforme à un premier mode de réalisation de l'invention,
- la figure 2 est une vue en perspective sous un autre angle et à une autre échelle de ce châssis et de ce système d'attelage,
- la figure 3 est une vue de détail de côté d'une partie de ce châssis dans laquelle se trouvent certains organes du dispositif selon l'invention (cette partie est désignée par la référence III sur la figure 2),
- les figures 4 et 5 sont des vues en perspective de deux variantes du premier mode de réalisation du dispositif selon l'invention,
- les figures 6 et 7 sont des vues de détail respectivement des figures 4 et 5, le châssis étant représenté séparé du système d'attelage,
- les figures 8 à 10 sont des vues schématiques en coupe transversale (c'est-à-dire perpendiculaire à la direction d'avancement de l'engin tracteur) de trois variantes de répartition de moyens élastiques interposés entre le châssis et le système d'attelage des figures 4 à 7,
- la figure 11 est une vue en perspective du système d'attelage des figures 4 et 6 dans une variante où il supporte des moyens élastiques,
- les figures 12 et 13 sont des vues schématiques en coupe transversale de deux variantes d'un deuxième mode de réalisation du dispositif selon l'invention,
- les figures 12A et 13A sont des vues en coupe selon les lignes XII et XIII respectivement des variantes des figures 12 et 13,
- les figures 14 et 15 sont des vues schématiques de deux autres modes de réalisation du dispositif selon l'invention, et
- la figure 16 est une vue analogue à celle de la figure 3 sur laquelle on a représenté des moyens de verrouillage du châssis sur le système d'attelage.

Sur ces figures, des références identiques désignent des organes ou ensembles d'organes identiques ou analogues.

Dans ce qui suit, on utilisera les termes « supérieur », « inférieur », « horizontal » et « vertical ».

Ces termes doivent s'entendre par rapport à la position que l'appareil agricole occupe lorsqu'il est porté à l'arrière d'un engin tracteur.

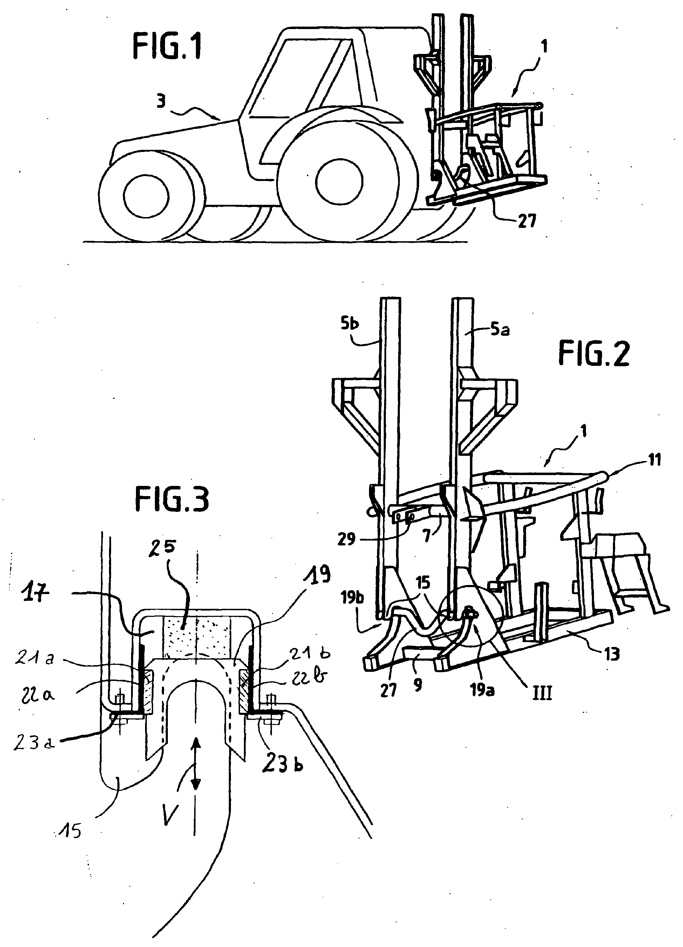

On se reporte à présent aux figures 1 et 2, sur lesquelles on a représenté un châssis 1 d'appareil agricole du type porté, c'est-à-dire un châssis destiné à être maintenu en porte-à-faux au-dessus du sol par le système d'attelage d'un engin tracteur 3.

Dans le mode de réalisation particulier représenté, ce châssis 1 est celui d'un pulvérisateur de produit phytosanitaire, destiné à recevoir une cuve non représentée.

Le châssis 1 comprend deux montants 5a, 5b destinés à supporter une rampe de pulvérisation (non représentée), reliés entre eux par une traverse supérieure 7 située à peu près à mi-hauteur de ces montants, et par une traverse inférieure 9.

La traverse supérieure 7 forme l'un des quatre côtés d'un cadre horizontal supérieur 11, et la traverse inférieure 9 forme l'un des quatre côtés d'un cadre horizontal inférieur 13.

Le cadre horizontal supérieur 11 est destiné à recevoir la cuve de produit phytosanitaire (non représentée).

On se reporte à la figure 3 sur laquelle on a représenté ceux des organes du dispositif selon l'invention qui sont disposés dans la partie inférieure du montant 5a, étant entendu que des organes identiques sont également disposés dans la partie inférieure du montant 5b.

Comme cela apparaît sur cette figure, la partie inférieure du montant 5a est conformée de manière à définir un crochet de liaison 15 dont la concavité est orientée vers le bas.

Dans le creux de ce crochet se trouve un logement sensiblement parallélépipédique 17 formé de préférence de matière avec le montant 5a.

Un étrier 19 dont la concavité est également orientée vers le bas est monté coulissant selon la direction verticale V à l'intérieur du logement 17.

Cet étrier 19 peut comprendre des garnitures de frottement 21a, 21b destinées à frotter contre des cales de frottement 22a, 22b montées fixes à l'intérieur du logement 17. D'autre part, on peut prévoir des plaques 23a, 23b rapportées sur le montant 5a, disposées sur les bords du logement 17 de manière à former des butées pour les garnitures de frottement 21a, 21b, afin d'empêcher que l'étrier 19 ne puisse s'échapper de ce logement.

Un organe élastique tel qu'un plot en matériau élastomère 25 est interposé entre l'étrier 19 et le fond du logement 17.

En variante, ce plot 25 pourrait être remplacé par tout moyen élastique équivalent, tel qu'un ressort hélicoïdal ou à air, ou hydraulique avec accumulateur.

On notera, comme cela est représenté, que l'encoche définie par le crochet de liaison 15 est plus grande que celle définie par l'étrier 19.

Comme cela est visible sur la figure 2, lorsque le châssis 1 est monté à poste sur l'engin tracteur 3, chacun des étriers 19a, 19b logés dans les parties inférieures des montants respectifs 5a, 5b coopère avec la barre d'attelage 27 de cet engin tracteur.

Ces étriers sont maintenus dans cette position sous l'effet du seul poids du châssis 1 (et de la cuve qu'il supporte), c'est-à-dire que le châssis 1 est en fait simplement posé sur la barre d'attelage 27.

Bien entendu, il faut comprendre qu'il y a également un troisième point 29 de fixation du châssis 1 sur le système d'attelage de l'engin tracteur 3, ce troisième point étant classiquement situé sur la traverse supérieure 7, au-dessus des deux autres points de fixation.

Classiquement, le châssis 1 peut être relié en ce point au système de relevage de l'engin tracteur 3 par une simple bielle (non représentée) autorisant des déplacements verticaux et horizontaux de ce châssis par rapport à ce système d'attelage.

La barre d'attelage 27 et la bielle constituent un système d'attelage connu de l'homme du métier sous le nom d' « attelage semi-automatique ».

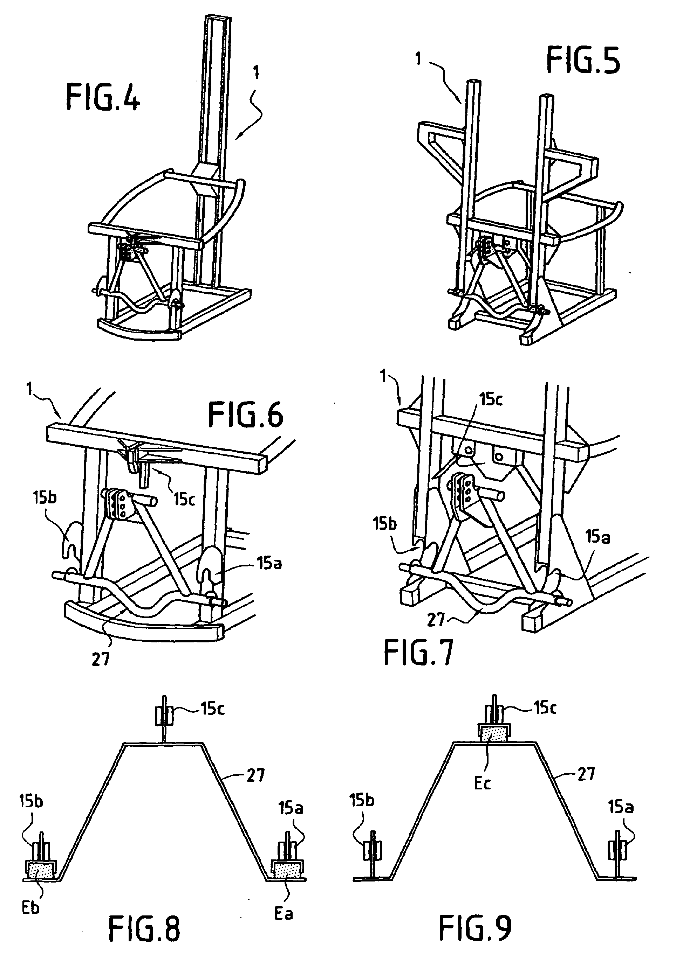

Dans les variantes représentées aux figures 4 à 7, le système d'attelage 27 présente une forme triangulaire, et le châssis 1 comporte trois organes formant crochets 15a, 15b, 15c, disposés en triangle de manière à pouvoir coopérer avec le triangle d'attelage 27.

Plus précisément, dans la variante représentée aux figures 4 et 6, l'organe formant crochet 15c est conçu de manière à pouvoir être démonté du châssis 1, de manière que l'on puisse adapter le châssis 1 à un système d'attelage « semi-automatique » tel que celui des figures 1 à 3.

Dans la variante représentée aux figures 5 et 7, l'organe formant crochet 15c est en fait une goulotte formée dans la structure du châssis, cette goulotte étant susceptible de coopérer avec la partie supérieure du triangle d'attelage 27.

Le triangle d'attelage 27 des figures 4 à 7 est connu de l'homme du métier sous le nom d' « attelage automatique ».

Sur les figures 8 à 10, on a représenté différentes dispositions possibles de moyens élastiques E interposés entre le châssis 1 et le triangle d'attelage 27.

Ces moyens élastiques peuvent être chacun conformes à ceux représentés à la figure 3, c'est-à-dire du type comprenant un étrier 19 susceptible de comprimer un plot en matériau élastomère 25 à l'intérieur d'un logement 17 formé dans le châssis 1.

Dans la variante représentée à la figure 8, les moyens élastiques Ea et Eb sont interposés uniquement entre la partie inférieure du triangle d'attelage 27 et les crochets inférieurs 15a, 15b du châssis 1.

Dans la variante représentée à la figure 9, les moyens élastiques Ec sont interposés uniquement entre la partie supérieure du triangle d'attelage 27 et le crochet supérieur 15c du châssis 1.

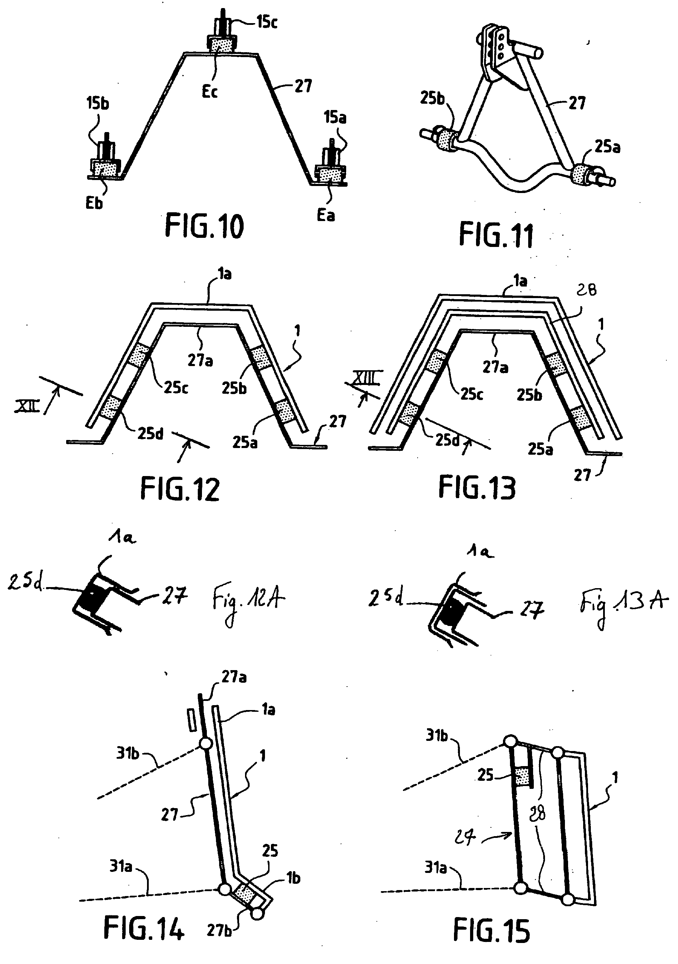

Dans la variante représentée à la figure 10, les moyens élastiques Ea, Eb et Ec sont interposés à la fois entre les parties inférieure et supérieure du triangle d'attelage 27 et les crochets inférieurs 15a, 15b et supérieur 15c du châssis 1.

Sur la figure 11, on a représenté une variante dans laquelle les moyens élastiques comprennent des bagues en matériau élastomère 25a, 25b directement enfilées sur la partie inférieure du triangle d'attelage 27.

Sur les figures 12 et 12A, on a représenté un autre mode de réalisation du dispositif selon l'invention dans lequel le châssis 1 comporte une partie 1 a définissant un profil femelle susceptible de venir s'encastrer sur un profil mâle défini par une partie 27a du système d'attelage 27.

Des plots en matériau élastomère 25a à 25d sont interposés entre les parties femelle 1a et mâle 27a, dans des zones de ces parties qui sont conformées en « U » complémentaires, comme cela est représenté à la figure 12A.

Dans une autre variante non représentée, on pourrait avoir une configuration inverse, c'est-à-dire une configuration dans laquelle le châssis comporterait une partie définissant un profil mâle susceptible de venir s'encastrer dans un profil femelle défini par une partie du système d'attelage.

La variante des figures 13 et 13A se distingue de celle de la figure 12 en ceci qu'elle comprend un faux châssis 28 interposé entre les parties femelle 1a et mâle 27a, des plots en matériau élastomère 25a à 25d étant interposés entre ce faux châssis et la partie mâle 27a.

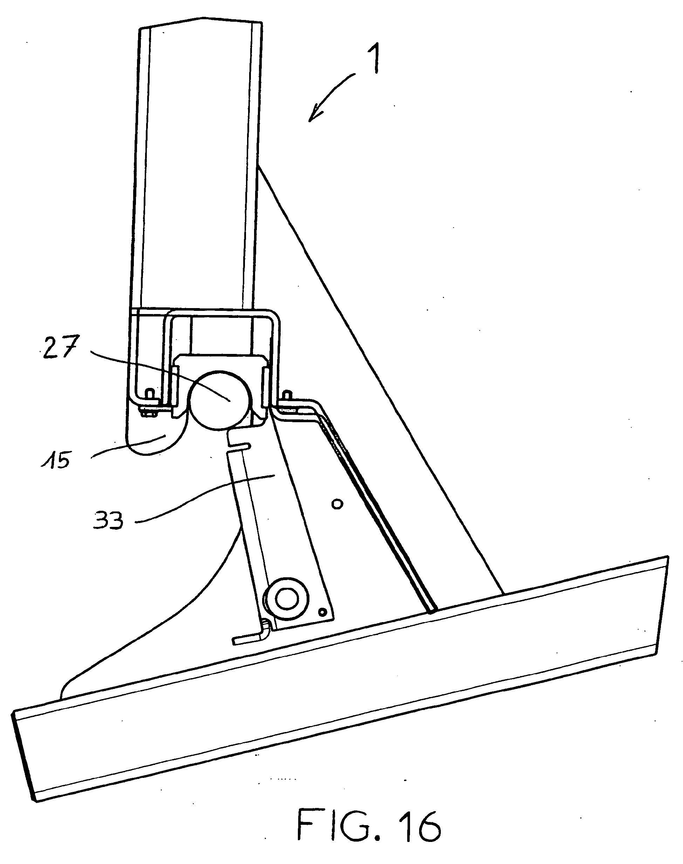

Sur les figures 14 et 15, on voit encore deux autres modes de réalisation du dispositif selon l'invention.

Sur ces figures, on voit les bras de relevage inférieur 31a et supérieur 31b de l'engin tracteur 3, supportant le système d'attelage 27.

Dans le mode de réalisation de la figure 14, le système d'attelage 27 comprend une partie supérieure de guidage 27a et au moins une bielle inférieure de retenue 27b, et le châssis 1 comprend une partie supérieure 1a montée coulissante sur la partie de guidage 27a et une partie inférieure 1b montée pivotante sur la bielle de retenue 27b.

Un ou plusieurs plots en matériau élastomère 25 sont interposés entre la partie inférieure 1b du châssis 1 et la bielle de retenue 27b.

Dans le mode de réalisation de la figure 15, un parallélogramme articulé 28 est interposé entre le système d'attelage 27 de l'engin tracteur 3 et le châssis 1.

Un ou plusieurs plots en matériau élastomère 25 sont interposés entre deux côtés du parallélogramme articulé de manière à le rappeler vers une position d'équilibre.

On notera que dans le mode de réalisation de la figure 15, le châssis 1 et le parallélogramme articulé 28 d'une part, et ce parallélogramme et le système d'attelage 27 d'autre part, peuvent être reliés entre eux au moyen de crochets (à la manière des modes de réalisation des figures 1 à 11), par encastrement (à la manière du mode de réalisation des figures 12 et 13), ou encore à la manière du mode de réalisation de la figure 14.

Le mode de fonctionnement et les avantages du dispositif selon l'invention résultent directement de la description qui précède.

Ce mode de fonctionnement et ces avantages seront décrits en référence au mode de réalisation des figures 1 à 3, étant entendu que ces explications peuvent être directement transposées aux modes de réalisation des autres figures.

Pour mettre en place le châssis 1 sur la barre d'attelage 27 de l'engin tracteur 3, on lève cette barre à mi-hauteur de manière que ses deux extrémités viennent se placer dans les parties conformées en crochet des montants 5a, 5b, et par là même dans les étriers 19a, 19b.

On verrouille ensuite le troisième point de fixation 29 du châssis 1 sur le système de relevage de l'engin tracteur 3, et enfin on commande la remontée complète du système d'attelage au moyen des bras de relevage de l'engin tracteur.

Ce faisant, sous l'effet du poids du châssis 1 (et de la cuve qu'il supporte), chaque étrier 19a, 19b vient comprimer son plot élastique 25 au fond de son logement 17.

Par la suite, lorsque l'engin tracteur se déplace, il subit des secousses provoquées par les irrégularités du terrain.

Chacune de ces secousses a pour effet d'imprimer un mouvement de translation verticale aux étriers 19a, 19b à l'intérieur de leurs logements respectifs.

Du fait de la présence des plots élastiques 25, un régime d'oscillations amorties s'instaure immédiatement, lequel permet d'écrêter et de dissiper une grande partie de l'énergie transmise par les secousses à l'engin tracteur, et ainsi de protéger le châssis 1.

Le frottement des garnitures 21a, 21b contre les cales de frottement 22a, 22b a pour effet d'amortir les oscillations de chaque étrier 19 à l'intérieur de son logement.

Dans l'ensemble des modes de réalisation exposés ci-dessus, on peut remarquer que le mouvement du châssis 1 par rapport au système d'attelage 27 est un mouvement de simple translation, grâce à quoi on supprime les inconvénients inhérents à l'état de la technique.

On notera que la protection du châssis 1 est encore meilleure dans le cas de la variante représentée à la figure 10, où la dissipation de l'énergie peut s'effectuer aux trois points de liaison du châssis avec le système d'attelage.

On notera également que le fait de prévoir que les parties inférieures des montants 5a, 5b soient conformées en crochets permet d'éviter que le châssis 1 ne s'échappe de la barre d'attelage 27 lors de ses mouvements d'oscillations par rapport à cette barre.

On notera que le fait de prévoir que les encoches définies par les crochets de liaison 15 soient supérieures à celles définies par les étriers 19 permet d'éviter que la barre d'attelage 27 ne vienne frotter et donc s'user contre les crochets 15.

On notera qu'il est préférable de prévoir des moyens de verrouillage comprenant au moins un loquet 33 tel que représenté à la figure 16, permettant d'empêcher que la barre d'attelage 27 ne puisse sortir des crochets 15.

Comme cela est connu en soi, ces loquets peuvent être rappelés en position de verrouillage par des moyens de ressort, et placés en position de déverrouillage manuellement.

Les deux loquets situés au droit de chacun des crochets 15 peuvent être reliés entre eux par une barre de liaison de manière que l'actionnement de l'un d'eux entraîne l'actionnement de l'autre.

On notera également que la variante représentée à la figure 11 est particulièrement économique, puisqu'elle permet d'interposer de manière extrêmement simple des moyens élastiques entre le châssis et le système d'attelage.

Comme on peut le comprendre à présent, le dispositif de fixation selon l'invention apporte une nette amélioration par rapport aux dispositifs de la technique antérieure dans lesquels le pulvérisateur peut osciller autour d'un axe transversal à l'avancement de l'engin tracteur.

Le dispositif selon l'invention apporte une amélioration sensible à la suspension des appareils agricoles maintenus par leur seul poids sur les systèmes d'attelage d'engins tracteurs.

Bien entendu, la présente invention n'est pas limitée au mode de réalisation décrit et représenté, fourni à titre d'exemple illustratif et non limitatif.

C'est ainsi par exemple que l'on pourrait envisager d'autres configurations du dispositif selon l'invention dans lesquelles les organes élastiques travailleraient en traction et non plus en compression sous l'effet des déplacements verticaux des étriers.

C'est ainsi également que l'on pourrait envisager que les logements à l'intérieur desquels se déplacent les étriers (voir figure 3) soient rapportés sur les montants du châssis, de manière à pouvoir être adaptés à des châssis classiques disponibles dans le commerce.

## Revendications

1. Dispositif de fixation d'un châssis (1) d'appareil agricole du type porté sur un engin tracteur (3), ce dispositif comprenant :
- un système d'attelage (27) destiné à être monté sur ledit engin tracteur (3),
- des moyens (15) pour relier ledit châssis (1) audit système d'attelage (27), aptes à maintenir cette liaison sous le seul effet du poids dudit appareil agricole, et
- des moyens élastiques (25, E) aptes à amortir les secousses verticales transmises entre ledit engin tracteur (3) et ledit châssis (1),
**caractérisé en ce que** lesdits moyens de liaison (15) sont adaptés pour permettre uniquement un mouvement de translation dudit châssis (1) par rapport audit système d'attelage (27).

2. Dispositif selon la revendication 1, **caractérisé en ce que** ledit système d'attelage (27) comprend au moins une barre d'attelage, et **en ce que** lesdits moyens de liaison (15) sont conformés de manière à pouvoir être crochetés sur ladite barre d'attelage.

3. Dispositif selon la revendication 2, **caractérisé en ce que** ledit système d'attelage (27) comprend un triangle d'attelage, et **en ce que** lesdits moyens de liaison (15) comprennent trois organes formant crochets (15a à 15c) disposés en triangle.

4. Dispositif selon la revendication 1, **caractérisé en ce que** ledit système d'attelage (27) définit sensiblement un profil mâle (27a), et **en ce que** lesdits moyens de liaison définissent sensiblement un profil femelle (1a) apte à s'encastrer sur ledit système d'attelage (27a).

5. Dispositif selon la revendication 1, **caractérisé en ce que** ledit système d'attelage définit sensiblement un profil femelle, et **en ce que** lesdits moyens de liaison définissent sensiblement un profil mâle apte à s'encastrer dans ledit système d'attelage.

6. Dispositif selon la revendication 1, **caractérisé en ce que** ledit système d'attelage (27) comprend une partie supérieure de guidage (27a) et au moins une bielle inférieure de retenue (27b), et **en ce que** lesdits moyens de liaison comprennent une partie supérieure (1a) montée coulissante sur ladite partie de guidage (27a) et une partie inférieure (1b) montée pivotante sur ladite bielle de retenue (27b).

7. Dispositif selon l'une quelconque des revendications précédentes, **caractérisé en ce que** lesdits moyens élastiques (25) sont disposés dans des logements (17) formés dans ledit châssis (1).

8. Dispositif selon la revendication 3, **caractérisé en ce que** lesdits moyens élastiques (25a, 25b) sont placés sur les barres formant ledit triangle d'attelage (27).

9. Dispositif selon la revendication 4, **caractérisé en ce qu'**il comprend un faux châssis (28) interposé entre lesdits profils mâle (27a) et femelle (1a), et **en ce que** lesdits moyens élastiques (25a à 25d) sont interposés entre ledit faux châssis (28) et ledit profil mâle (27a).

10. Dispositif selon la revendication 1, **caractérisé en ce qu'**il comprend un parallélogramme articulé (28) interposé entre ledit châssis (1) et ledit système d'attelage (27), et **en ce que** lesdits moyens élastiques (25) sont disposés de manière à rappeler ce parallélogramme vers une position d'équilibre.

11. Dispositif selon l'une quelconque des revendications précédentes, **caractérisé en ce qu'**il comprend des moyens (33) pour verrouiller lesdits moyens de liaison (15) sur ledit système d'attelage (27).

12. Dispositif selon l'une quelconque des revendications précédentes, **caractérisé en ce que** lesdits moyens élastiques (25) comprennent un organe choisi dans le groupe comprenant un plot en matériau élastomère, un ressort hélicoïdal, un ressort à air et un ressort hydraulique avec accumulateur.

## Claims

1. Device for fixing a chassis (1) of a carried-type agricultural appliance to a tractor vehicle (3), this device comprising:
- a coupling system (27) intended to be mounted on said tractor vehicle (3),
- means (15) for connecting said chassis (1) to said coupling system (27), able to maintain this connection entirely by virtue of the effect of the weight of said agricultural appliance, and
- elastic means (25, E) able to damp vertical jolts transmitted between said tractor vehicle (3) and said chassis (1),
**characterised in that** said connecting means (15) are adapted to allow only movement in translation of said chassis (1) relative to said coupling system (27).

2. Device according to claim 1, **characterised in that** said coupling system (27) comprises at least one coupling bar, and **in that** said connecting means (15) are conformed so that they can be hooked over said coupling bar.

3. Device according to claim 2, **characterised in that** said coupling system (27) comprises a coupling triangle, and **in that** said connecting means (15) comprise three members forming hooks (15a to 15c) disposed in a triangle.

4. Device according to claim 1, **characterised in that** said coupling system (27) substantially defines a male profile (27a), and **in that** said connecting means substantially define a female profile (1 a) adapted to be nested over said coupling system (27a).

5. Device according to claim 1, **characterised in that** said coupling system substantially defines a female profile, and **in that** said connecting means substantially define a male profile adapted to be nested in said coupling system.

6. Device according to claim 1, **characterised in that** said coupling system (27) comprises an upper guiding part (27a) and at least one lower retaining link (27b), and **in that** said connecting means comprise an upper part (1a) mounted to slide on said guiding part (27a) and a lower part (1b) mounted to pivot on said retaining link (27b).

7. Device according to any one of the preceding claims, **characterised in that** said elastic means (25) are disposed in housings (17) formed in said chassis (1).

8. Device according to claim 3, **characterised in that** said elastic means (25a, 25b) are placed on the bars forming said coupling triangle (27).

9. Device according to claim 4, **characterised in that** it comprises a dummy chassis (28) disposed between said male profile (27a) and said female profile (1 a), and **in that** said elastic means (25a to 25d) are disposed between said dummy chassis (28) and said male profile (27a).

10. Device according to claim 1, **characterised in that** it comprises an articulated parallelogram (28) disposed between said chassis (1) and said coupling system (27), and **in that** said elastic means (25) are disposed to urge this parallelogram towards an equilibrium position.

11. Device according to any one of the preceding claims, **characterised in that** it comprises means (33) for locking said connecting means (15) to said coupling system (27).

12. Device according to any one of the preceding claims, **characterised in that** said elastic means (25) comprise a member chosen in the group comprising an elastomer material block, a coil spring, an air spring and a hydraulic spring with accumulator.

## Patentansprüche

1. Vorrichtung zur Befestigung eines Gestells (1) eines landwirtschaftlichen Geräts des Typs, der auf einem Traktor (3) angebracht wird, wobei diese Vorrichtung umfasst:
- ein Anhängerkupplungssystem (27), das an dem Traktor (3) zu befestigen ist,
- Mittel (15) zur Verbindung des Gestells (1) mit dem Anhängerkupplungssystem (27), die geeignet sind, diese Verbindung nur durch das Gewicht des landwirtschaftlichen Geräts zu halten und
- elastische Mittel (25, E) die in der Lage sind, senkrechte Stöße zwischen dem Traktor (3) und dem Gestell (1) aufzufangen,
**dadurch gekennzeichnet, dass** die Verbindungsmittel (15) so angepasst sind, dass sie nur eine Verschiebungsbewegung des Gestells (1) im Verhältnis zum Anhängerkupplungssystem (27) zulassen.

2. Vorrichtung nach Anspruch 1, **dadurch gekennzeichnet, dass** das Anhängerkupplungssystem (27) mindestens einen Verbindungsbalken umfasst und dass die Verbindungsmittel (15) so gerichtet sind, dass sie an den Verbindungsbalken gehängt werden können.

3. Vorrichtung nach Anspruch 2, **dadurch gekennzeichnet, dass** das Anhängerkupplungssystem (27) ein Anhängerkupplungsdreieck umfasst und dass die Verbindungsmittel (15) drei Haken bildende Elemente (15a bis 15c) umfassen, die in einem Dreieck angeordnet sind.

4. Vorrichtung nach Anspruch 1, **dadurch gekennzeichnet, dass** das Anhängerkupplungssystem (27) deutlich ein Streckprofil (27a) bildet und dass die Verbindungsmittel deutlich ein aufnehmendes Profil (1a) bilden, das geeignet ist, sich in das Verbindungssystem (27a) einzufügen.

5. Vorrichtung nach Anspruch 1, **dadurch gekennzeichnet, dass** das Anhängerkupplungssystem deutlich ein aufnehmendes Profil bildet und dass die Verbindungsmittel deutlich ein Steckprofil bilden, das geeignet ist, sich in das Anhängerkupplungssystem einzufügen.

6. Vorrichtung nach Anspruch 1, **dadurch gekennzeichnet, dass** das Verbindungssystem (27) einen oberen führenden Teil (27a) und mindestens eine untere Rückhaltestange (27b) umfasst und, dass die Verbindungsmittel einen oberen Teil (1a) umfassen, der gleitend auf dem führenden Teil (27a) angebracht ist und einen unteren Teil (1b), der schwenkend auf der Rückhaltestange (27b) angebracht ist.

7. Vorrichtung nach einem der vorstehenden Ansprüche, **dadurch gekennzeichnet, dass** die elastischen Mittel (25) in Lagern (17) angeordnet sind, die in dem Gestell (1) gebildet sind.

8. Vorrichtung nach Anspruch 3, **dadurch gekennzeichnet, dass** die elastischen Mittel (25a, 25b) auf Stangen platziert sind, die das Anhängerkupplungsdreieck (27) bilden.

9. Vorrichtung nach Anspruch 4, **dadurch gekennzeichnet, dass** sie einen Zwischenrahmen (28) umfasst, der zwischen dem Steckprofil (27a) und dem aufnehmenden Profil (1a) eingefügt ist und **dadurch gekennzeichnet, dass** die elastischen Mittel (25a bis 25d) zwischen dem Zwischenrahmen (28) und dem Steckprofil (27a) eingefügt sind.

10. Vorrichtung nach Anspruch 1, **dadurch gekennzeichnet, dass** sie ein bewegliches Parallelogramm (28) zwischen dem Gestell (1) und dem Kupplungssystem (27) umfasst und dass die elastischen Mittel (25) so angebracht sind, dass sie dieses Parallelogramm in eine Gleichgewichtsposition zurück führen.

11. Vorrichtung nach einem der vorstehenden Ansprüche, **dadurch gekennzeichnet, dass** sie Mittel (33) umfasst, um die Verbindungsmittel (15) auf dem Anhängerkupplungssystem (27) zu verriegeln.

12. Vorrichtung nach einem der vorstehenden Ansprüche, **dadurch gekennzeichnet, dass** die elastischen Mittel (25) ein Element aus der Gruppe umfassen, die einen Kontakt aus Elastomermaterial, eine spiralförmige Feder, eine Luftfeder und eine Hydraulikfeder mit Akku umfasst.
